# EUROPEAN PATENT APPLICATION

(11) **EP 1 069 715 A1**
(43) Date of publication of application: **17.01.2001**
(21) Application number: 00901969.6
(22) Date of filing: 28.01.2000
(51) Int. Cl.: H04H 1/00, H04L 29/06, H04N 5/38, H04N 5/44, H04N 7/08

(54) **METHOD AND APPARATUS FOR DATA TRANSMISSION**

(30) Priority: 29.01.1999 JP 2204899
(71) Applicant: Sony Corporation, Tokyo 141-0001 (JP); Information Broadcasting Laboratories, Inc., Taito-ku, Tokyo 111-0035 (JP)
(72) Inventor: NISHIO, Fumihiko, Sony Corporation, Tokyo 141-0001 (JP); GONNO, Yoshihisa, Sony Corporation, Tokyo 141-0001 (JP); HARAOKA, Kazuo, Sony Corporation, Tokyo 141-0001 (JP); TAKABAYASHI, Kazuhiko, Sony Corporation, Tokyo 141-0001 (JP); YAMAGISHI, Yasuaki, Sony Corporation, Tokyo 141-0001 (JP)
(74) Representative: Pratt, Richard Wilson
(86) International application number: JP0000460
(87) International publication number: WO0045535

(57) **Abstract**

A meta information schema that is input through a meta information schema input portion 201 is stored to a meta information schema storing portion 202. On the other hand, meta information is supplied to a meta information input portion 203. The meta information schema is also supplied to the meta information input portion 203. The meta information input portion 203 converts the meta information corresponding to the meta information schema structure and supplies the converted information to a meta information storing portion 205. A meta information schema - meta information encoding portion 204 converts the meta information schema and the meta information supplied from the meta information schema storing portion 202 and the meta information storing portion 205 into information corresponding to a predetermined transmission format. A transmitting portion 206 multiplexes an output of the meta information schema - meta information encoding portion 204 and contents data stored in the contents data storing portion 207 and generates a transmission signal.

## Description

### Technical Field

The present invention relates to a data transmitting apparatus and a data transmitting method for transmitting data having contents data of video data, audio data, and so forth of for example a digital satellite broadcast.

### Related Art

Many techniques have been proposed as data delivering systems. For example, on the Internet, data is delivered using WWW (World Wide Web) corresponding to HTTP (Hyper Text Transfer Protocol). To search desired data from a huge amount of data collection of WWW (World Wide Web), the use of meta data is becoming common. The meta data contains a data structure. As an example of systems that selectively receive data corresponding to meta data from WWW, PICS (Platform for Internet Content Selection) and RDF (Resource

### Description Framework) have been proposed.

In a digital broadcast, meta information such as a program title and broadcast time data that are structural elements of EPG (Electronic Program Guide) are transmitted in the format of EIT (Event Information Table). Information of EPG is represented as a section type table referred to as SI (Service Information). A receiver extracts relevant information from the table and displays the extracted information on its screen. With EPG, the user can select data as programs from successive broadcast data.

Although a digital broadcast is mono-directionally transmitted to a very large number of terminal units, a large amount of data can be simultaneously transmitted. Thus, it is advantageous to merge a digital broadcast and a network. In reality, meta information is added to contents data on the Internet or contents data of a digital broadcast.

The format of meta information of a digital broadcast (for example, EIT) is not compatible with the format of meta information of a conventional network such as the Internet. To solve this problem, both types of meta information are used as they are. However, in a system using WWW such as PICS or RDF, since meta information is represented in a text format, the transmission efficiency is not high. In addition, to selectively receive meta information through a broad band broadcast network, the receiver side should filter received data at high speed. However, in the text format, it is difficult to filter received data at high speed.

On the other hand, meta information such as EIT of a digital broadcast has a dedicated format. The meta information is transmitted using predetermined descriptors. In other words, a converting method for converting meta information such as EIT into data corresponding to WWW has not been defined. In addition, a method for transmitting flexible meta information such as PICS or RDF corresponding to the MPEG system used in a digital broadcast and a format that represents meta information have not been defined.

To solve these problems, a method for converting such meta information into a format suitable for a digital broadcast has been proposed in a prior patent application (Japanese Patent Application No. Hei 10-170397). In other words, in the prior patent application, as with EPG, meta information corresponding to a RDF model is contained as a section type table referred to as SI.

In recent years, in a transmission format of additional information for contents data, a descriptive method for adding meta information and a meta information schema (referred to as description and description scheme, respectively, in the MPEG 7 standard) has been studied so as to effectively search digital video data and audio data.

To add the meta information and meta information schema to digital broadcast data that is delivered and provide a search service using the meta information and meta information schema, it is necessary to effectively transmit the meta information and meta information schema.

In the conventional method, since the transmission format of the meta information is different from the transmission format of the meta information schema, the transmitter side should separately perform an encoding process for the meta information and meta information schema, whereas the receiver side should separately perform a decoding process for the meta information and meta information schema. Thus, the processes are not effectively performed on the transmitter side and the receiver side.

### Disclosure of the Invention

Therefore, an object of the present invention is to provide a data transmitting apparatus and a data transmitting method for transmitting meta information and a meta information schema that are converted in the same transmission format so as to allow the transmitter side to highly effectively transmit the meta information and the receiver side to highly effectively receive the meta information.

The present invention is a data transmitting apparatus for transmitting data having contents data that is delivered, comprising a meta information storing means for storing meta information that is a description of the contents data to be transmitted, a meta information schema storing means for storing a data structure of the meta information, a transmission information converting means for converting the meta information stored in the meta information storing means and the meta information schema stored in the meta information schema storing means into information in a transmission format, and a transmitting means for transmitting an output of the transmission information converting means.

In addition, the present invention is a data transmitting method for transmitting data having contents data that is delivered, comprising the steps of storing meta information that is a description of the contents data to be transmitted, storing a data structure of the meta information, converting the meta information stored at meta information storing step and the meta information schema stored at meta information schema storing step into information in a transmission format, and transmitting an output at transmission information converting step.

According to the present invention, a meta information schema and meta information can be transmitted in the same transmission data format.

### Brief Description of Drawings

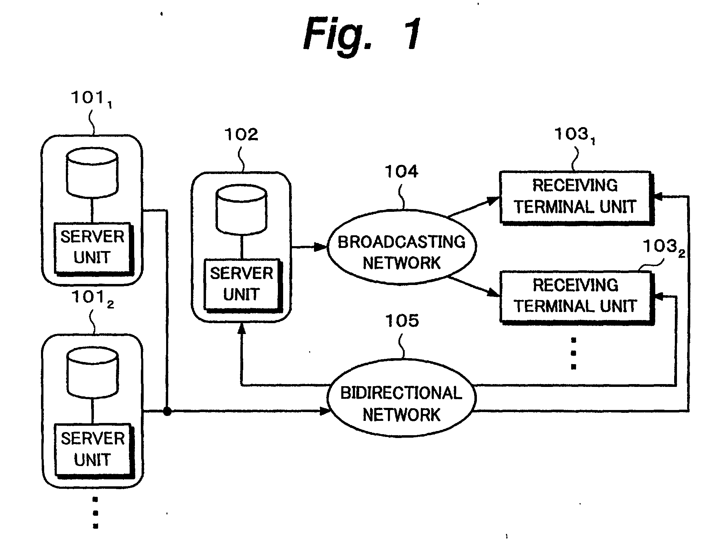

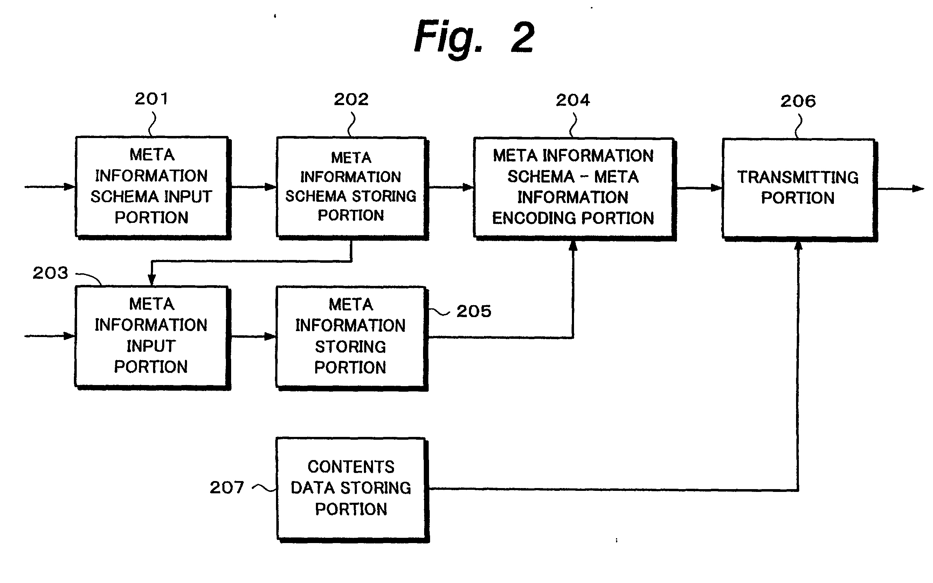

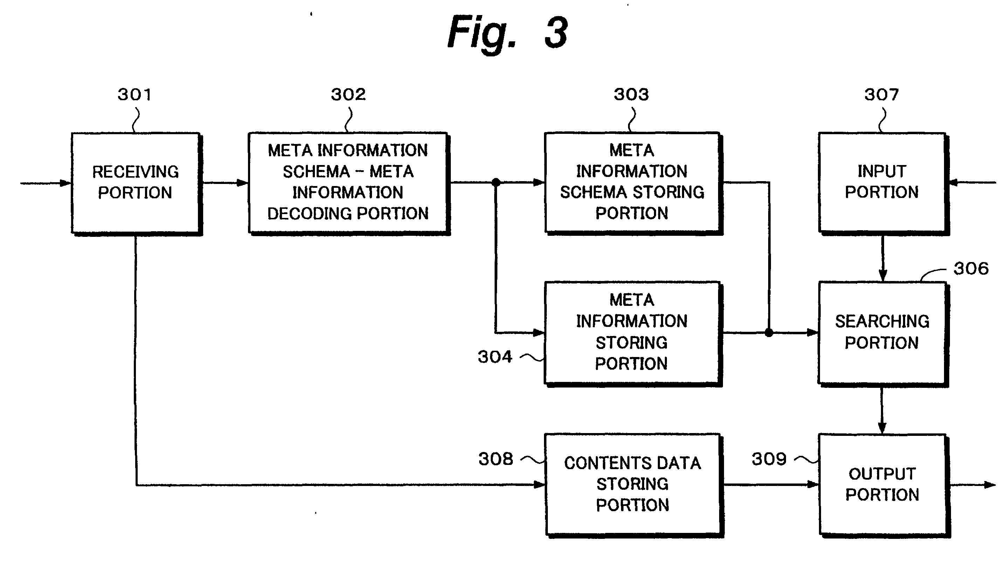

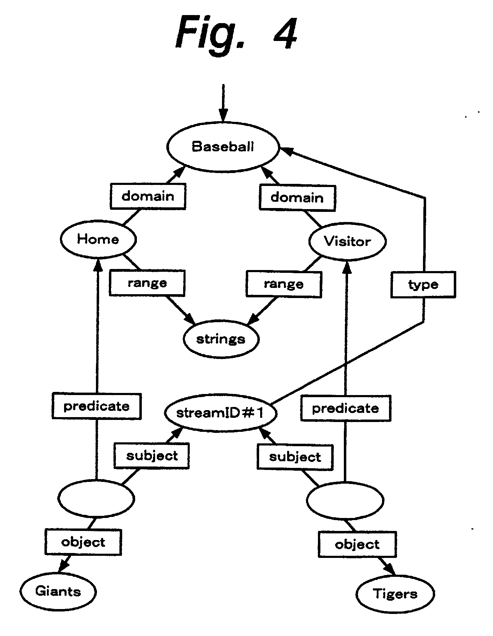

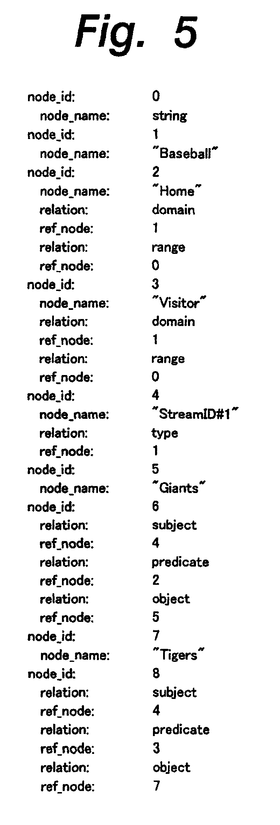

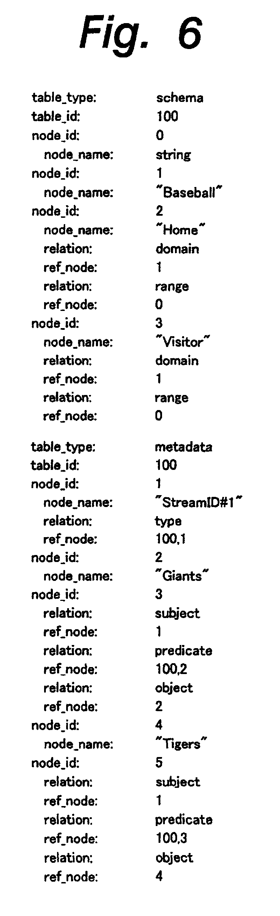

Fig. 1 is a block diagram for explaining the overall structure of an embodiment of the present invention; Fig. 2 is a block diagram for explaining the structure of a particular portion of the embodiment of the present invention; Fig. 3 is a block diagram for explaining the structure of another particular portion of the embodiment of the present invention; Fig. 4 is a schematic diagram showing examples of meta information schemes and meta information represented corresponding to an RDF data model; Fig. 5 is a schematic diagram showing an example of a conversion to an MPEG-2 section table format; and Fig. 6 is a schematic diagram showing another example of a conversion to an MPEG-2 section table format.

### Best Modes for Carrying out the Invention

Next, with reference to Fig. 1, the overall structure of the embodiment of the present invention will be described. Information providers 101₁, 101₂, ... each have a database. The database stores contents data, meta information schemas that represent the structures of meta information of the contents data, and meta information corresponding to the contents data. The contents data is for example WWW pages. The information providers 101₁, 101₂, ... are connected to a broadcasting station 102 and receiving terminal units 103₁, 103₂, .... through a bidirectional network 105. The information provider 101 can supply contents data, meta information schemas, and meta information to the receiving terminal units 103₁, 103₂, .... through the bidirectional network 105.

The broadcasting station 102 has a database that stores contents data, meta information schemas that represent the structures of meta information of the contents data, and meta information corresponding to the contents data. The contents data is for example broadcast programs. The broadcasting station 102 is connected to the receiving terminal units 1031, 1032, ... through a broadcasting network 104. The broadcasting station 102 can supply the contents data, the meta information schema, and the meta information to the receiving terminal units 103₁, 103₂, .... In addition, the broadcasting station 102 can receive contents data, a meta information schema, and meta information from the information provider 101 through the bidirectional network and deliver them to the receiving terminal units 103₁, 103₂, ... trough the broadcasting network 104. Real examples of the broadcasting station 102 are a broadcasting satellite of a digital satellite broadcast and a broadcasting station of a digital ground wave satellite broadcast.

According to the present invention, a transmitting process for contents data, a meta information schemas, and meta information and a receiving process thereof are effectively performed. When contents data is a broadcast program, meta information is additional information such as "program title: seven o'clock news", "program genre: news", and "broadcast time: 7:00 to 7:30". A meta information schema defines the structure of meta information. A meta information schema is not limited to one type. In other words, a meta information schema varies corresponding to the type of contents data and a condition such as an age.

When contents data is a broadcast program, the meta information schema defines that meta information is composed of "program title", "program genre", "broadcast time", "parental guide", and so forth. When contents data is a data broadcast, the meta information schema defines that meta information is composed of "program name", "program genre", "applicable OS", and so forth. Since there are a plurality of meta information schemas, information for correctly identifying a meta information schema corresponding to meta information is transmitted along therewith so that the receiving terminal units 103₁, 103₂, ... correctly recognize the meta information schema corresponding to the meta information.

Fig. 2 shows an example of the structure of a particular portion of the broadcasting station 102. The particular portion performs a process for transmitting contents data, meta information, and a meta information schema. The meta information schema is input through a meta information schema input portion 201, supplied to a meta information schema storing portion 202, and stored thereto. On the other hand, the meta information is supplied to a meta information input portion 203. The meta information schema stored in the meta information schema storing portion 202 is supplied to the meta information input portion 203.

The meta information input portion 203 converts the supplied meta information into data in a data structure corresponding to the meta information schema stored in the meta information schema storing portion 202. Thus, meta information in the data structure corresponding to the meta information schema stored in the meta information schema storing portion 202 is stored to the meta information storing portion 205. As was described above, since there are a plurality of meta information schemas, it is necessary to identify them. Thus, when meta information is stored to the meta information storing portion 205, a meta information schema identifier for identifying a meta information schema is added to meta information.

The meta information schema storing portion 202 and the meta information storing portion 205 supply a meta information schema and meta information to a meta information schema - meta information encoding portion 204. The meta information schema - meta information encoding portion 204 converts the supplied meta information schema and meta information into them in a predetermined transmission format such as an MPEG-2 section table format. The descriptive format of the meta information schema stored in the meta information schema storing portion 202 may vary for each contents data or each of the information providers 101₁, 101₂, ... However, the meta information schema - meta information encoding portion 204 outputs a meta information schema in only one transmission format. Likewise, the descriptive format of meta information stored in the meta information storing portion 205 may vary for each contents data or each of the information providers 101₁, 101₂, ... However, the meta information schema - meta information encoding portion 204 outputs meta information in only one transmission format.

An output signal of the meta information schema - meta information encoding portion 204 is supplied to a transmitting portion 206. In addition, contents data stored in a contents data storing portion 207 is supplied to the transmitting portion 206. The transmitting portion 206 multiplexes the meta information schema and meta information that are in the transmission format and that are output from the meta information schema - meta information encoding portion 204 with the contents data that is supplied from a contents data storing portion 207. The multiplexed signal is transmitted to the broadcasting network 104 and so forth. The contents data storing portion 207 temporarily stores contents data supplied from the information providers 101₁, 101₂, .... as well as contents data generated by the broadcasting station 102.

The structure of the portion that performs the process for transmitting contents data, meta information, and a meta information schema and that is disposed in the information providers 101₁, 101₂, ... may be the same as the structure shown in Fig. 2. However, in this case, the transmitting portion 206 that transmits contents data, meta information, and a meta information schema to the broadcasting network 104 is omitted.

Fig. 3 shows an example of the structure of a portion that performs a process for receiving contents data, meta information, and a meta information schema and that is disposed in the receiving terminal units 103₁, 103₂, .... Contents data, a meta information schema, and meta information are input to a receiving portion 301 through the broadcasting network 104 or the like. The receiving portion 301 supplies the meta information schema and the meta information to a meta information schema - meta information decoding portion 302. In addition, the receiving portion 301 supplies the contents data to a contents data storing portion 308. The meta information schema - meta information decoding portion 302 decodes the meta information schema and the meta information. The decoded meta information schema and meta information are supplied and stored to a meta information schema storing portion 303 and a meta information storing portion 304, respectively. On the other hand, the contents data storing portion 308 stores the supplied contents data.

The users of the receiving terminal units 103₁, 103₂, ... input user profile information corresponding to desired information through an input portion 307. The user profile information is supplied to a searching portion 306. The searching portion 306 reads a meta information schema and meta information from the meta information schema storing portion 303 and the meta information storing portion 304 and selects meta information corresponding to the user profile information. The interpretation of such meta information (namely, a process for affecting data received as meta information to a searching process with reference to a meta information schema and so forth) can be more effectively performed since the transmission format of the meta information schema is the same as the transmission format of the meta information. The meta information selected by the searching portion 306 is supplied to an output portion 309. The output portion 309 reads contents data corresponding to the selected meta information from the contents data storing portion 308 and outputs the contents data. Thus, the user of the receiving terminal unit can obtain desired information.

Fig. 4 shows examples of a meta information schema and meta information represented corresponding to an RDF data model. A connection relation of nodes represented by ellipses and character strings in rectangles added to oriented segments between nodes is converted into data in an MPEG-2 section table format by the meta information schema - meta information encoding portion 204 and transmitted.

Fig. 5 shows an example of a conversion to the MPEG-2 section table format. In Fig. 5, identification numbers (node_id) and names (node_name) of individual nodes shown in Fig. 4 are successively listed. In Fig. 5, nodes having a connection relation with other nodes denoted by oriented segments contain a connection relation (relation) and a node identification number (ref_node) connected to an oriented segment. In such a manner, a meta information schema and meta information can be converted into data in the same format and stored in the same table. Thus, on both the transmitter side and the receiver side, it is not necessary to dispose encoders and decoders corresponding to individual meta information schemas and meta information. Thus, the transmitter side and the receiver side can use one encoder and one decoder, respectively. In other words, with the meta information schema - meta information encoding portion 204 shown in Fig. 2 and the meta information schema - meta information decoding portion 302 shown in Fig. 3, meta information can be accurately handled.

Fig. 6 shows another example of a conversion to the MPEG-2 section table format. In this example, a meta information schema and meta information are stored in different tables whose formats are the same. Each table has an identifier (table_type) that represents which of meta information schema or meta information has been stored. In Fig. 6, the first line of the top table contains "table_type : schema" that represents that this table contains a meta information schema. On the other hand, the first line of the bottom table contains "table_type : metadata" that represents that this table contains meta information. In this descriptive method, the receiving terminal units 103₁, 103₂, ... can identify for example meta information schemas corresponding to identifiers without need to process the entire table.

It should be noted that the present invention is not limited to the above-described embodiment. In other words, it should be understood by those skilled in the art that the foregoing and various other changes, omissions, and additions in the form and detail thereof may be made therein without departing from the spirit and scope of the present invention.

As was described above, according to the present invention, a meta information schema and meta information are transmitted in the same transmission data format. Thus, the encoding process and the interpreting process for meta information can be effectively performed on the transmitter side. In addition, the decoding process and so forth for meta information can be effectively performed on the receiver side.
- 102: BROADCASTING STATION
- 204: META INFORMATION SCHEMA - META INFORMATION ENCODING PORTION
- 205: META INFORMATION STORING PORTION
- 207: CONTENTS DATA STORING PORTION
- 302: META INFORMATION SCHEMA - META INFORMATION DECODING PORTION
- 304: META INFORMATION STORING PORTION
- 308: CONTENTS DATA STORING PORTION
- 309: OUTPUT PORTION

## Claims

1. A data transmitting apparatus for transmitting data having contents data that is delivered, comprising:
meta information storing means for storing meta information that is a description of the contents data to be transmitted;
meta information schema storing means for storing a data structure of the meta information;
transmission information converting means for converting the meta information stored in said meta information storing means and the meta information schema stored in said meta information schema storing means into information in a transmission format; and
transmitting means for transmitting an output of said transmission information converting means.

2. The data transmitting apparatus as set forth in claim 1,
wherein said transmission information converting means converts the meta information and the meta information schema into information in the same data format.

3. The data transmitting apparatus as set forth in claim 1,
wherein said second transmission information converting means performs a converting process for converting the meta information and the meta information schema into information in the same data format and adds an identifier that represents whether the data as the result of the converting process is the meta information or the meta information schema.

4. The data transmitting apparatus as set forth in claim 1,
wherein said second transmission information converting means converts the meta information and the meta information schema storing means into information in an MPEG-2 section table format.

5. A data transmitting method for transmitting data having contents data that is delivered, comprising the steps of:
storing meta information that is a description of the contents data to be transmitted;
storing a data structure of the meta information;
converting the meta information stored at meta information storing step and the meta information schema stored at meta information schema storing step into information in a transmission format; and
transmitting an output at transmission information converting step.
